# EUROPÄISCHE PATENTSCHRIFT

(11) **EP 0 645 058 B1**
(45) Veröffentlichungstag und Bekanntmachung des Hinweises auf die Patenterteilung: **10.06.1998**
(21) Anmeldenummer: 94910343.6
(22) Anmeldetag: 18.03.1994
(51) Int. Cl.: H02J 7/14, H02J 7/24

(54) **SPANNUNGSREGLER ZUR REGELUNG DER AUSGANGSSPANNUNG EINES GENERATORS**
VOLTAGE REGULATOR TO CONTROL THE OUTPUT VOLTAGE OF A GENERATOR
REGULATEUR DE TENSION PERMETTANT DE REGULER LA TENSION DE SORTIE D'UN GENERATEUR

(30) Priorität: 08.04.1993 DE 4311670
(43) Veröffentlichungstag der Anmeldung: 29.03.1995
(73) Patentinhaber: ROBERT BOSCH GMBH, 70442 Stuttgart (DE)
(72) Erfinder: SCHRAMM, Guenter, D-71665 Vaihingen-Enzweihingen (DE); KOHL, Walter, D-76467 Bietigheim (DE); MEYER, Friedhelm, D-75428 Illingen (DE); MITTAG, Rainer, D-70806 Kornwestheim (DE)
(86) Internationale Anmeldenummer: DE9400297
(87) Internationale Veröffentlichungsnummer: WO9424755

(56) Entgegenhaltungen:
- DE-A- 3 843 163
- GB-A- 2 248 700
- US-A- 4 424 477
- US-A- 4 555 657

## Beschreibung

Die Erfindung geht aus von einem Spannungsregler zur Regelung der Ausgangsspannung eines Generators, der von einer Brennkraftmaschine angetrieben wird, nach der Gattung des Hauptanspruchs.

Zur Versorgung der elektrischen Verbraucher eines Kraftfahrzeuges werden heute vorzugsweise Drehstrom-Generatoren eingesetzt. Diese Generatoren erzeugen eine Wechselspannung bzw. einen Wechselstrom, der in einer dem Generator nachgeschalteten Gleichrichteranordnung gleichgerichtet wird und zur Versorgung der Verbraucher sowie zum Aufladen der Batterie verwendet wird. Da die Ausgangsspannung des Drehstrom-Generators erheblich von der Generatordrehzahl abhängt, muß zur Erzielung der gewünschten konstanten Ausgangsspannung ein Spannungsregler verwendet werden.

Bei fremderregten Generatoren beeinflußt der Spannungsregler den Generatorerregerstrom. Dabei wird der Erregerstrom mit Hilfe eines Transistors laufend ein- oder ausgeschaltet. Das vorliegende Erregerstromtastverhältnis hängt davon ab, wie starkt der Generator belastet wird bzw. wie hoch die Drehzahl der Brennkraftmaschine und damit auch die des Generators ist.

Ein solches Generator-Spannungsreglersystem ist beispielsweise aus der US-PS 4 424 477 bekannt. Bei diesem bekannten System wird zusätzlich die Spannung der Batterie des Fahrzeuges gemessen und geprüft, ob diese Spannung unter einem vorgegebenen Wert liegt. Ist dies der Fall, wird die Leerlaufdrehzahl der Brennkraftmaschine und damit des Generators erhöht, so daß seine Ausgangsleistung ansteigt. Dieser bekannte Spannungsregler hat den Nachteil, daß zusätzlich die Batteriespannung gemessen werden muß um einen schlechten Ladezustand zu erkennen.

Aus der US PS 4 555 657 ist ein Spannungsregler zur Regelung der Ausgangsspannung eines Generators in einem Kraftfahrzeug bekannt, bei dem das Erregerstromtastverhältnis gemessen wird. Das gemessene Erregerstromtastverhältnis wird im Spannungsregler selbst aufbereitet und bei der Festlegung der Höhe der Regelspannung mitberücksichtigt wird. Damit soll sichergestellt werden, daß eine optimale Batterieladung möglich ist. Weiterhin soll bei dem bekannten Spannungsregler der Spannungsabfall auf der Leitung zwischen dem Generator und der Batterie unter Berücksichtigung des vorliegenden Erregerstromtastverhältnisses kompensiert werden. Ein Eingriff auf die Drehzahlregelung ist nicht vorgesehen.

Aus der GB-A 22 48 700 ist eine Einrichtung zur Leerlaufregelung bei einer Brennkraftmaschine bekannt, bei der das Erregerstromtastverhältnis bei der Leerlaufregelung mitberücksichtigt wird. Dieser Leerlaufregelung liegt die Erkenntnis zugrunde, daß das Einschalten eines starken elektrischen Verbrauchers zu einer Drehzahlreduzierung führen kann, da der Generator bei hoher Leistungsabgabe ein bremsendes Moment auf den Motor verursacht. Um einen Drehzahleinrbuch zu vermeiden wird die angesaugte Luftmasse vergrößert sobald das Erregerstromtastverhältnis erkennen läßt, daß ein starker elektrischer Verbraucher zugeschaltet wurde. Durch diese Maßnahme wird die im Abfallen befindliche Drehzahl, insbesonders Leerlaufdrehzahl wieder angehoben und nähert sich dem erwünschten Sollwert an. Eine Erhöhung der Drehzahl bzw. der Leerlaufdrehzahl über den eigentlichen Sollwert zur Steigerung der Ausgangsleistung des Generators wird nicht durchgeführt.

Der erfindungsgemäße Spannungsregler zur Regelung der Ausgangsspannung eines Generators, der von einer Brennkraftmaschine angetrieben wird, ist im Anspruch 1 gekennzeichnet.

### Zeichnung

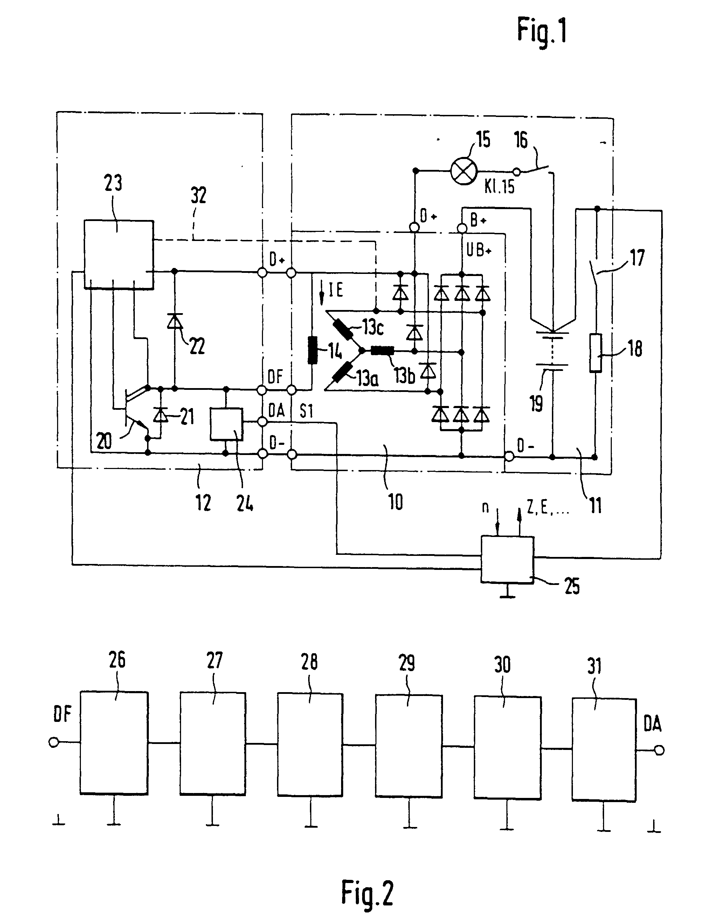

Ein Ausführungsbeispiel der Erfindung ist in der Zeichnung dargestellt und wird in der nachfolgenden Beschreibung näher erläutert. Dabei zeigt Figur 1 ein übliches Generator-Reglersystem eines Kraftfahrzeuges, das ergänzt ist um die erfindungsgemäße Schaltung. Diese erfindungsgemäße Schaltung ist in Figur 2 näher ausgeführt.

### Beschreibung des Ausführungsheispieles

In Figur 1 ist schematisch ein Drehstromgenerator 10, der das mit 11 bezeichnete Bordnetz versorgt, dargestellt. Die Regelung der Generatorausgangsspannung UB+ erfolgt mit einem Spannungsregler 12. Die bei solchen Generator-Spannungssystemen vorhandenen Anschlußklemmen werden üblicherweise mit D-, DF, D+ und B+ bezeichnet.

Der Generator 10 umfaßt neben den Statorwicklungen 13a, 13b, 13c noch eine Erregerwicklung 14. Weiterhin sind noch Gleichrichterbrücken 15a, 15b und 16 eingezeichnet, die zur Gleichrichtung des Generatorsausgangsstromes bzw. zur Gleichrichtung des Erregerstromes dienen.

Vom Bordnetz ist lediglich die Ladekontrollampe 15 sowie die Klemme KL.15, die mit dem Zündschalter 16 in Verbindung steht, ein Schalter 17 und ein Verbraucher 18 sowie eine Batterie 19 dargestellt, an die die einzelnen Verbraucher angeschlossen sind.

Vom Spannungsregler sind als erfindungswesentliche Teile angegeben, ein Schaltelement, beispielsweise ein Schalttransistor 20 mit einer parallel geschalteten Schutzdiode 21, eine Freilaufdiode 22 sowie ein Steuerteil 23, das die Ansteuerung des Transistors 20 durchführt.

Die Erregerwicklung 14, die zwischen den Anschlüssen D+ und DF liegt sowie der Transistor 20, der zwischen DF und D- liegt, bildet eine Serienschaltung. Durch Öffnen und Schließen der Schaltstrecke des Transistors 20 wird der Stromfluß IE durch die Erregerwicklung 14 gesteuert. Je nach Drehzahl oder Belastung des Generators ändert sich das Tastverhältnis. Bei hoher Generatorbelastung und/oder niedriger Drehzahl n ist der Transistor 20 wesentlich länger in leitendem Zustand, bei niedrigerer Belastung verlängert sich die Phase, in der der Transistor sperrt. Das Erregerstromtastverhältnis T stellt also ein Kriterium zur Erkennung der Generatobelastung dar.

Die bis hierher beschriebene Spannungsregler-Generatoranordnung zur Versorgung eines Fahrzeugbordnetzes ist Stand der Technik und beispielsweise aus der DE-OS 38 43 163 bekannt. Zusätzlich ist erfindungsgemäß vorgesehen, zwischen die Klemme DF und D- bzw. in die Ansteuerung des Transistors 20 eine Schaltung 24 einzubauen, die das an der Klemme DF anliegende Erregerstromtastverhältnis T direkt empfängt und weiterverarbeitet.

Das dabei erhaltene Signal wird über die Klemme DA nach außen geführt und kann zu bestimmten Regelzwecken, beispielsweise zur Beeinflussung der Leerlaufdrehzahl oder zum Zu- bzw. Abschalten von Verbrauchern im Steuergerät der Brennkraftmaschine weiterverarbeitet werden. Dieses Steuergerät trägt das Bezugszeichen 25, es ist über Zuleitungen mit verschiedenen Punkten der Brennkraftmaschine bzw. des Spannungsreglers 12 oder mit Verbrauchern verbunden, es sind hier nur Verbindungen zwischen DA und dem Steuergerät 25 sowie B+ und dem Steuergerät 25 dargestellt.

Zwischen dem Steuergerät 25 und dem Steuerteil 23 des Spannungsreglers ist eine Verbindung vorhanden, über die für eine optimale Spannungsregelung wichtige Größen wie beispielsweise die Drehzahl n oder eine Information über das Vorliegen bestimmter Betriebszustände der Brennkraftmaschine, beispielweise Leerlauf, dem Spannungsregler zugeführt werden.

Die Drehzahlerfassung ist auch über einen Phaseneingang vom Generator im Spannungsregler selbst möglich, es wird dabei das Signal über die Leitung 32 dem Steuerteil 23 des Reglers zugeführt, das die Schaltung 24 in geeigneter Weise beeinflußt.

Die Erfindung ist nicht auf einen Generator mit Erregerdioden beschränkt, sondern kann bei allen Generatoren mit einer Erregerwicklung, die von einem regelbaren Erregerstrom IE durchflossen wird, eingesetzt werden.

Die Schaltung 24 ist in Figur 2 als Blockschaltung ausführlicher dargestellt, es bedeuten im einzelnen 26 die Eingangsbeschaltung, 27 eine Pulsformerstufe, 28 ein Integrator, 29 eine Schaltstufe, 30 ein Verstärker und 31 eine Ausgangsbeschaltung. Diese einzelnen Bestandteile der Schaltung 24 sind für sich genommen bekannt, als Integrator kann ein Operationsverstärker oder einfach eine Kondensator/Widerstandsanordnung eingesetzt werden. Als Schaltstufe kann ein beliebiger Schwellwertschalter oder beispielsweise ein Schmitt-Trigger eingesetzt werden. Bei Verwendung eines Schmitt-Triggers kann eine Umschalthysterese erzielt werden, die obere und die untere Schwelle fallen dabei nicht zusammen.

Als Verstärker ist ein üblicher Operationsverstärker verwendbar, die Eingangs- und Ausgangsbeschaltung entspricht einem üblichen Schaltverstärker. Die Ausgangsbeschaltung ist entsprechend dem Steuergerät 25 ausgebildet.

Die in Figur 1 dargestellte Spannungsregler-Generatoranordnung erzeugt die im Kraftfahrzeug benötigte elektrische Energie. Der Spannungsregler regelt die Generatorausgangsspannung so, daß sie unabhängig von der Drehzahl und der Belastung konstant bleibt. Sofern normaler Betriebszustand vorliegt und keine besonders hohen Anforderungen an die vom Generator abgegebene Leistung gestellt werden, wenn weiterhin die Drehzahl höher als die Leerlaufdrehzahl ist, sind keine weiteren Maßnahmen als die übliche Generatorregelung erforderlich.

Im Leerlauf können jedoch Betriebszustände auftreten, in denen die abgegebene Leistung die Erfordernisse nicht mehr befriedigen kann. Eine Anhebung der Drehzahl der Brennkraftmaschine und damit auch der Generatordrehzahl kann in einem solchen Fall eine erhöhte Leistungsabgabe des Generators bewirken oder ein Abschalten unwichtiger Verbraucher. Damit ist eine verbesserte Batterieladung gewährleistet. In einem solchen Fall wird daher die Schaltung 24 durch das Steuergerät 25 aktiviert bzw. das Steuergerät wird durch Schaltung 24 aktiviert. Am Ausgang der Schaltung 24 entsteht dabei ein Signal, das zur Anhebung der Generatordrehzahl direkt verwendet werden kann. In der Schaltung 24, die in integrierter Bauweise aufgebaut ist und im Reglergehäuse untergebracht ist, wird dazu das an der Klemme DF sich einstellende Erregerstromtastverhältnis ausgewertet. Dieses Tastverhältnis wird in der Eingangsschaltung 26 entsprechend aufbereitet und in der Pulsformerstufe in weiterverarbeitbare Pulsform gewandelt.

Im Integrator 28 werden die aus dem an DF abgegriffenen Signal gebildete Pulse über eine vorgebbare Zeit aufintegriert. Das Ausgangssignal des Integrators wird in der Schwellwertstufe mit einem Schwellwert verglichen, diese schaltet beispielsweise nach Überschreiten des Schwellwertes um.

Die Anordnung ist dabei so ausgelegt, daß in dem Fall, in dem das Erregerstromtastverhältnis T z.B. größer als 95% ist, wenn also die Einschaltdauer des Transistors 20 bezogen auf seine Ausschaltdauer größer als 95% ist, entsteht am Ausgang der Schaltstufe 29 ein hoher Signalpegel. Bei Unterschreiten des Schwellwertes schaltet die Schaltstufe 29 nicht gleich wieder auf niedrigen Pegel um sondern erst dann, wenn das Erregerstromtastverhältnis T einen Wert von z.B. 75% unterschreitet. Dadurch wird eine Umschalthysterese von z.B. 20% erzielt.

Liegt das Erregerstromtastverhältnis beim Einschalten unterhalb der 95%, bleibt der Ausgang der Schaltstufe auf niedrigem Pegel, ein Umschalten erfolgt erst nach Überschreiten von 95%.

Das am Ausgang der Schaltstufe 29 entstehende Signal wird im Verstärker 30 noch verstärkt, so daß an der Klemme DA ein Ausgangssignal entsteht, das beispielsweise in seinem low-Zustand kleiner als 2 Volt und in high-Zustand größer als 2 Volt ist.

Mit der so gewählten Logik können mit dem "high"-Zustand direkt Maßnahmen wie Drehzahlerhöhung oder Lastabschaltung eingeleitet werden, während der "low"-Zustand keine Maßnahmen auslöst.

Damit die Wirkung der Schaltung 24 auf einen Bereich beschränkt wird, der dem Leerlaufbereich entspricht, wird entweder vom Steuergerät 25 der Schaltung 24 über eine weitere Verbindung ein entsprechendes Aktivierungssignal zugeführt oder im Steuergerät wird das vom Anschluß DA kommende Signal der Schaltung 24 nur dann verarbeitet, wenn Leerlaufbetrieb erkannt ist bzw. wenn die Drehzahl n der Brennkraftmaschine unter einem vorgebbaren Wert von beispielsweise 1000 U/min liegt. Die Messung der Drehzahl erfolgt mit einem geeigneten Drehzahlsensor, dessen Ausgangssignale im Steuergerät ausgewertet werden oder direkt im Regler durch Auswertung des Phasensignales.

## Patentansprüche

1. Spannungsregler zur Regelung der Ausgangsspannung eines Generators, der von einer Brennkraftmaschine angetrieben wird und eine variable Last mit elektrischer Leistung versorgt, mit einer Erregerwicklung, die mit einem Schaltmittel in Serie liegt und von einem Teil des Generatorausgangsstrom durchflossen wird, wobei das Schaltmittel so ein- oder ausgeschaltet wird, daß sich unabhängig von Belastungen des Generators eine im wesentlichen konstante Generatorausgangsspannung einstellt, mit einer im Spannungsregler (12) vorhandenen Schaltung (24), die das Erregerstromtastverhältnis (T) erfaßt und zu einem Signal (S1) formt, das einen ersten Zustand annimmt, wenn das Erregerstromtastverhältnis (T) über einem ersten vorgebbaren Wert liegt und einen zweiten Zustand annimmt, wenn das Erregerstromtastverhältnis (T) unter einem zweiten vorgebbaren Wert liegt, dadurch gekennzeichnet, daß das Signal (S1) über einen Anschluß (DA) am Spannungsregler (12) abgreifbar ist, daß das abgegriffene Signal (S1) dem Steuergerät (25) der Brennkraftmaschine zugeführt wird und von diesem zur Regelung der Drehzahl (n) der Brennkraftmaschine, derart verwendet wird, daß die Leerlaufdrehzahl abhängig vom Signal (S1) erhöht wird und die Schaltung nur arbeitet, wenn die Drehzahl der Brennkraftmaschine unter einem vorgebbaren Wert liegt, wobei die Höhe der Drehzahl durch das Steuergerät (25) ermittelt wird und dieses der Schaltung (24) entsprechende Ansteuerimpulse gibt.

2. Spannungsregler nach Anspruch 1, dadurch gekennzeichnet, daß die Schaltung (24) wenigstens einen Integrator (28) umfaßt, dessen Ausgangssignal den Schaltzustand einer nachgeschalteten Schaltstufe (29) beeinflußt.

3. Spannungsregler nach Anspruch 2, dadurch gekennzeichnet, daß vor dem Integrator (28) zusätzlich eine Pulsformerstufe (27) angeordnet ist.

4. Spannungsregler nach Anspruch 2 oder 3, dadurch gekennzeichnet, daß das Ausgangssignal der Schaltstufe (29) verstärkt wird.

5. Spannungsregler nach einem der vorhergehenden Ansprüche, dadurch gekennzeichnet, daß als Schwellwertstufe ein Schmitt-Trigger mit einer einstellbaren Schalthysterese verwendet wird.

6. Spannungsregler nach Anspruch 5, dadurch gekennzeichnet, daß die Schaltwellen des Schmitt-Triggers in Abhängigkeit vom Erregerstromtastverhältnis eingestellt werden und die obere Schwelle im Bereich von T = 95% und die untere Schwelle im Bereich von T= 75% liegt.

## Claims

1. Voltage regulator for controlling the output voltage of a generator, which is driven by an internal combustion engine and supplies a variable load with electric power, having a field winding which is connected in series with a switching means and through which a portion of the generator output current flows, the switching means being switched on or off in such a way that an essentially constant generator output voltage is set independently of loads on the generator, having a circuit (24) present in the voltage regulator (12), which detects the field current pulse duty factor (T) and forms it into a signal (S1) which assumes a first state when the field current pulse duty factor (T) is above a first prescribable value, and assumes a second state when the field current pulse duty factor (T) is below a second prescribable value, characterized in that the signal (S1) can be tapped via a terminal (DA) at the voltage regulator (12), and in that the tapped signal (S1) is fed to the control device (25) of the internal combustion engine and is used by the latter to control the speed (n) of the internal combustion engine in such a way that the idling speed is increased as a function of the signal (S1) and the circuit operates only when the speed of the internal combustion engine is below a prescribable value, the speed level being determined by the control device (25) and the latter supplying the circuit (24) with corresponding drive pulses.

2. Voltage regulator according to Claim 1, characterized in that the circuit (24) comprises at least one integrator (28) whose output signal influences the output state of a downstream output stage (29).

3. Voltage regulator according to Claim 2, characterized in that a pulse shaping stage (27) is additionally arranged upstream of the integrator (28).

4. Voltage regulator according to Claim 2 or 3, characterized in that the output signal of the output stage (29) is amplified.

5. Voltage regulator according to one of the preceding claims, characterized in that a Schmitt trigger with an adjustable switching hysteresis is used as threshold value stage.

6. Voltage regulator according to Claim 5, characterized in that the actuating shafts of the Schmitt trigger are set as a function of the field current pulse duty factor, and the upper threshold is in the region of T = 95%, and the lower threshold is in the region of T = 75%.

## Revendications

1. Régulateur de tension servant à réguler la tension de sortie d'un générateur qui est entraîné par un moteur à combustion interne et qui alimente en puissance électrique une charge variable, avec un enroulement d'excitation qui est en série avec un moyen de commande et qui est parcouru par une partie du courant de sortie du générateur, le moyen de commande étant branché ou débranché de telle sorte qu'il s'établisse indépendamment de la charge du générateur une tension de sortie du générateur sensiblement constante, avec un circuit (24), existant dans le régulateur de tension (12) qui détecte le taux d'impulsions du courant d'excitation (T) et forme un signal (S1) qui prend un premier état, quand le taux d'impulsions du courant d'excitation (T) se trouve en dessus d'une première valeur que l'on peut prédéfinir et prend une second état quand le taux d'impulsions du courant d'excitation (T) se trouve en dessous d'une seconde valeur que l'on peut prédéfinir,
caractérisé en ce que
• le signal (S1) peut être prélevé au moyen d'un raccord (DA) sur le régulateur de tension (12);
• le signal prélevé (S1) est amené à l'appareil de commande (25) du moteur à combustion interne et est utilisé à partir de celui-ci pour réguler la vitesse de rotation (n) du moteur à combustion interne d'une manière telle que la vitesse de rotation au ralenti soit augmentée en fonction du signal (S1) et que le circuit ne fonctionne que quand la vitesse de rotation du moteur à combustion interne se trouve en dessous d'une valeur que l'on peut prédéfinir, l'importance de la vitesse de rotation étant déterminée par l'appareil de commande (25) et celui-ci délivrant au circuit (24) des impulsions de commande correspondantes.

2. Régulateur de tension selon la revendication 1, caractérisé en ce que le circuit (24) comprend au moins un intégrateur (28), dont le signal de sortie influence l'état de branchement d'un circuit de commande (29) monté en aval.

3. Régulateur de tension selon la revendication 2, caractérisé en ce que
avant l'intégrateur (28) on dispose en plus un étage (27) de conformation des impulsions.

4. Régulateur de tension selon la revendication 2 ou 3,
caractérisé en ce que
le signal de sortie de l'étage de commande (29) est amplifié.

5. Régulateur de tension selon l'une des revendications précédentes,
caractérisé en ce que
comme étage de valeur de seuil on utilise une bascule de Schmitt avec une hystérésis de commande réglable.

6. Régulateur de tension selon la revendication 5, caractérisé en ce que
• les axes de commande de la bascule de Schmitt sont réglés en fonction du taux d'impulsions du courant d'excitation et
• le seuil supérieur se trouve dans la zone de T= 95 % et le seuil inférieur dans la zone de T=75 %.
